Europäisches Patentamt

European Patent Office

Office européen des brevets

(11) Numéro de publication: **0 689 371 A1**

# DEMANDE DE BREVET EUROPEEN

(21) Numéro de dépôt: **95201573.3**

(51) Int. Cl.⁶: **H04Q 11/04**, H04J 3/16

(22) Date de dépôt: **13.06.95**

(30) Priorité: **22.06.94 FR 9407664**

(43) Date de publication de la demande:
**27.12.95 Bulletin 95/52**

(84) Etats contractants désignés:
**DE FR GB**

(71) Demandeur: **T.R.T. TELECOMMUNICATIONS
RADIOELECTRIOUES ET TELEPHONIOUES
88, rue Brillat Savarin
F-75013 Paris (FR)**

(84) **FR**

(71) Demandeur: **PHILIPS ELECTRONICS N.V.**

**Groenewoudseweg 1
NL-5621 BA Eindhoven (NL)**

(84) **DE GB**

(72) Inventeur: **Gauthier, Jean-Pierre
Société Civile S.P.I.D.,
156, Boulevard Haussmann
F-75008 Paris (FR)**

(74) Mandataire: **Chaffraix, Jean
Société Civile S.P.I.D.
156, Boulevard Haussmann
F-75008 Paris (FR)**

(54) **Système de communication comportant un réseau et un dispositif de multiplexage**

(57) Ce système pour réseau ATM comporte des moyens pour gérer l'émission de cellules ATM. Ces moyens consistent essentiellement en un circuit d'affectation (300) comportant un circuit d'arborescence (358) coopérant avec un circuit calculateur de dates (325). Ce circuit (325) affecte une date à chacune des cellules à émettre en fonction du débit désiré. Le circuit d'arborescence est parcouru d'une part dans un sens feuilles-racines pour déterminer des dates de plus faible valeur classées selon un ordre de priorité, parmi des dates calculées et, d'autre part, dans le sens racine-feuilles pour sélectionner la date la plus prioritaire inférieure à une date courante fournie par un organe de datation (350).

Application : réseau ATM.

FIG.4

EP 0 689 371 A1

La présente invention concerne un système de communication formé d'au moins un réseau du genre A.T.M., notamment, qui transmet d'un de ses points d'accès à un autre des cellules d'informations comportant un identificateur de routage (VP) et d'au moins un dispositif de multiplexage constitué par :

- une pluralité de bornes d'accès pour des utilisateurs ayant des cellules à transmettre, avec un certain débit, vers une certaine destination définie par ledit identificateur de routage,
- au moins une borne de raccord pour au moins un point d'accès dudit réseau,
- une pluralité de circuits de service munis d'organes de files d'attente pour emmagasiner chacun les cellules d'utilisateur ayant un même identificateur de routage et pour rendre disponibles, sur des sorties de cellules, les cellules emmagasinées,
- un circuit d'affectation pour déterminer la fourniture, à ladite borne de raccord par l'intermédiaire d'un circuit de sortie, d'une cellule, dite cellule élue, parmi les cellules disponibles.

L'invention concerne aussi un dispositif de multiplexage convenant à un tel système.

Les réseaux A.T.M. se répandent de plus en plus et pour les utiliser au maximum des possibilités qu'ils offrent, il convient de multiplexer les données à des débits divers que l'utilisateur veut transmettre et de lui donner satisfaction pour des services de natures variées.

Un tel système est décrit dans la demande de brevet français n° 93 03776 déposée au nom de la demanderesse le 31 mars 1993. Dans ce système connu, il est fait appel à une table d'affectation dont les cases sont préalablement remplies par un organe de gestion du système. Cet organe affecte les cases de la table aux circuits de service en fonction de leur débit respectif, en commençant par le débit le plus élevé et en finissant par le débit le plus faible. Si une case est déjà occupée (nécessairement par un circuit de service dont le débit requis est plus élevé), la première case suivante libre est recherchée et enfin utilisée. Cette table est, ensuite, exploitée par scrutation périodique et cyclique au moyen d'un pointeur courant qui s'incrémente et désigne le circuit de service élu et donc son identificateur de routage (VP).

Bien que donnant satisfaction, il s'est avéré que ce système connu nécessitait quelques améliorations, notamment en ce qui concerne la réduction de la "gigue" G. On définit cette grandeur G par :

$$G = (dee - dth)^*D$$

où :

"dee" est la date d'émission effective de la cellule considérée,

"dth" est la date d'émission théorique calculée à partir du débit que doit offrir le service pour lequel la cellule est affectée,

"D" est le débit requis mesuré en cellules par seconde.

Ce système connu peut induire une gigue incompatible avec un service temps réel. C'est le cas où une cellule pour un service donné apparaît juste après le choix d'une cellule précédente de ce même service dans la table. Cette deuxième cellule ne sera prise en compte qu'une période "1/D" après. La gigue atteint alors 100 % ou plus.

La présente invention propose un système du genre mentionné dans le préambule qui offre une gigue moins importante.

Pour cela, un tel système est remarquable en ce que le circuit d'affectation comporte :

- une table de correspondance pour affecter d'une manière biunivoque les indicateurs de routage à un code de priorité qui fixe un ordre de priorité d'émission des cellules en fonction du débit,
- un organe de calcul de date théorique d'émission pour fournir, en fonction du débit, une date, dite date théorique d'émission, aux cellules reçues par chaque circuit de service et
- un premier circuit d'arborescence formé
  • de "feuilles " pour recevoir les dates théoriques pour chaque circuit de service,
  • d'une racine pour contenir des dates dites dates racines à partir desquelles est établie la date la plus prioritaire,
  • d'un circuit d'extraction pour fournir le code de priorité à partir des dates racines en choisissant la date.

Le système selon l'invention résout le problème de la gigue d'une manière satisfaisante lorsque la charge de trafic n'est pas trop conséquente.

Une caractéristique importante de l'invention selon laquelle le circuit d'affectation comporte :

- un organe de calcul de date butée pour fournir, en fonction d'une gigue tolérable pour chaque indicateur de routage (VP) une date tenant compte de cette tolérance,
- un deuxième circuit d'arborescence connecté en cascade avec le premier, coopérant avec cet organe de calcul de date butée pour fournir à sa racine la date butée la plus faible à partir de laquelle la cellule élue relative à l'identificateur de routage est déterminée,

amène l'avantage supplémentaire que la gigue reste tolérable même pour un trafic important.

La description suivante, accompagnée des dessins ci-annexés, le tout donné à titre d'exemple non limitatif, fera bien comprendre comment l'invention peut être réalisée.

- La figure 1 montre un système conforme à l'invention.
- La figure 2 montre la structure des cellules d'information transmises par le réseau.
- La figure 3 montre un dispositif de multiplexage conforme à l'invention.
- La figure 4 montre la structure d'un circuit d'affectation faisant partie du dispositif de la figure 3.
- La figure 5 montre l'arborescence sur laquelle est basée l'invention.
- La figure 6 montre le détail d'un circuit d'arborescence pour mettre en oeuvre l'arborescence montrée à la figure 5.
- La figure 7 montre une variante du circuit d'affectation.

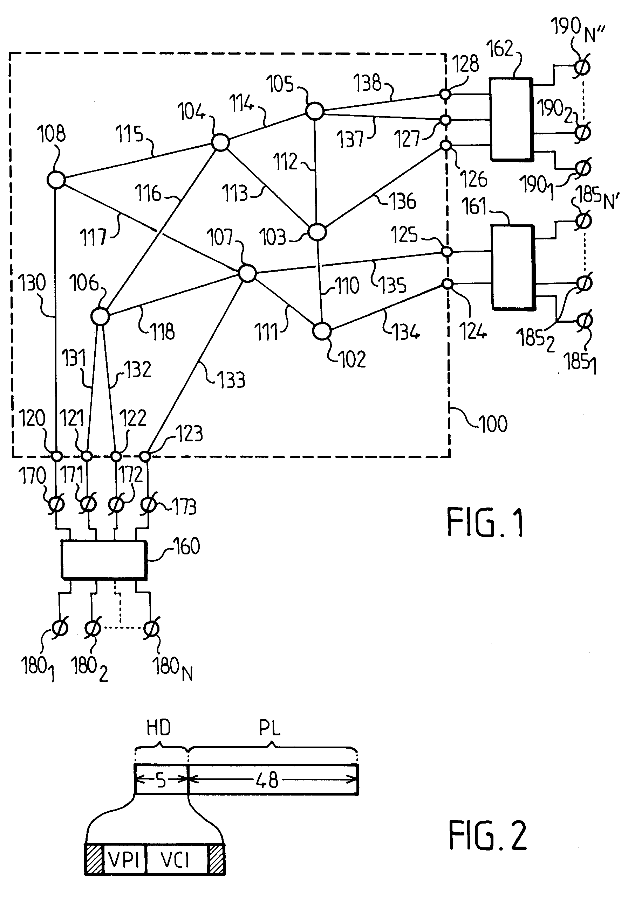

La figure 1 montre d'une manière schématisée un réseau A.T.M. portant sur la figure la référence 100. On trouvera une description de ce réseau dans l'ouvrage " ASYNCHRONOUS TRANSFER MODE " de MARTIN de PRYCKER paru aux éditions ELLIS HORWOOD en Angleterre. Ce réseau est constitué de différents noeuds 102, 103, 104, 105, 106, 107 et 108 reliés entre eux par des liaisons 110 à 118 pour relier respectivement les noeuds 102-103, 102-107, 103-105, 103-104, 104-105, 104-108, 104-106, 107-108 et 106-107. On a repéré par 120 à 128 différents points d'accès de ce réseau. Ces points d'accès sont respectivement reliés aux noeuds 108, 106, 107, 102, 107, 103 et 105 par l'intermédiaire de liaisons 130 à 138 respectivement. A ces points d'accès, se connectent différents dispositifs de multiplexage et de démultiplexage 160, 161 et 162. Parmi ces dispositifs faisant partie de la présente invention, il faut distinguer : un dispositif de multiplexage 160 et deux dispositifs de démultiplexage 161 et 162 qui effectuent les opérations inverses de celles du dispositif 160. Pour être relié aux quatre points 120, 121, 122 et 123, le dispositif de multiplexage 160 est muni de quatre bornes de raccord 170, 171, 172 et 173. Ainsi les informations peuvent, dans le cadre de cet exemple décrit, aller du dispositif 160 vers les dispositifs 162 et 164 en transitant par le réseau 100. Ces informations à transmettre sont appliquées à une pluralité de bornes d'accès $180_1$ à $180_N$ dont est pourvu le dispositif de multiplexage 160, et peuvent être fournies, entre autres, à des bornes de sortie $185_1$ à $185_{N'}$ du dispositif 161 et $190_1$ à $190_{N''}$ du dispositif 162. Les informations transmises dans le réseau se présentent sous forme de cellules dont l'allure est montrée à la figure 2. Ces cellules sont formées de 53 octets : 5 constituent l'entête HD et les 48 autres référencés par PL contiennent les données pour un service à transmettre. Dans l'entête, on distingue deux codes VPI et VCI correspondant respectivement à des identificateurs de chemin virtuel et de circuit virtuel. Les identificateurs de chemin sont plutôt traités par l'opérateur de transmission et l'identificateur de circuit virtuel par l'utilisateur.

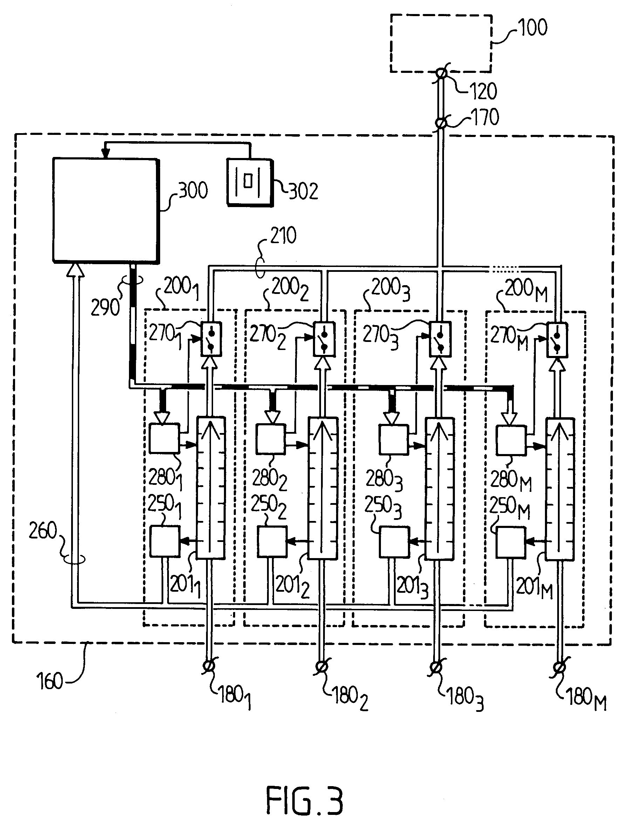

La figure 3 montre un schéma du dispositif de multiplexage 160. Sur cette figure, on s'intéresse seulement, pour simplifier l'exposé, aux cellules à fournir à la seule borne 170 à partir d'un certain nombre de bornes d'accès $180_1$ à $180_M$ et l'on ne s'intéressera qu'aux codes VPI, qualifiés d'identificateurs de routage (VP). Pour bien situer les problèmes que l'invention se propose de résoudre, M a une valeur relativement importante que l'on prend égale à 4096.

Chacune de ces bornes $180_1$ à $180_M$ est susceptible de recevoir des cellules ayant le même identificateur et le même débit. Ce débit est défini par : $1/td_i$ où $td_i$ représente le temps qui sépare deux cellules et l'indice i ($1 \leq i \leq M$) détermine l'indice des accès $180_1$ à $180_M$. Les cellules sont emmagasinées respectivement dans des organes de file d'attente $200_1$, $200_2$, $200_3$, ..., $200_M$ constituées à partir d'une mémoire de type FIFO $201_1$, $201_2$, $201_3$, ..., $201_M$. Ces mémoires restituent à leur sortie les données dans l'ordre où elles ont été entrées. Un code de reconnaissance est affecté à chacun de ces organes $200_1$, $200_2$, $200_3$, ..., $200_M$. Ce code de reconnaissance sera assimilé pour des raisons de simplicité des explications à l'identificateur de routage (VP). Une ligne commune de données 210 connecte la sortie de organes de file d'attente à la borne 170. Chaque organe de file d'attente est muni d'un circuit de notification 250 pour notifier la présence d'un cellule à son entrée. Ce circuit envoie cette notification accompagnée du code de reconnaissance sur une ligne commune 260. Les organes de file d'attente sont aussi pourvus d'organes d'autorisation d'émettre que l'on a fait figurer sous forme d'un interrupteur $270_i$, d'une part, et par un organe décodeur $280_i$, d'autre part. L'entrée de cet organe décodeur est reliée à une troisième ligne commune 290 qui interconnecte tous les organes de file d'attente $200_1$, $200_2$, $200_3$, ..., $200_M$.

Un circuit d'affectation 300 en traitant les notifications transmises sur la ligne 260, fournit sur cette dernière ligne 290 le code de reconnaissance pour autoriser l'organe de file d'attente, concerné par ce code, à émettre une cellule dite cellule élue. Ce circuit d'affectation fonctionne au rythme d'une horloge 302 qui fournit aussi, d'une manière non montrée, d'autres signaux aux différents composants du circuit de multiplexage.

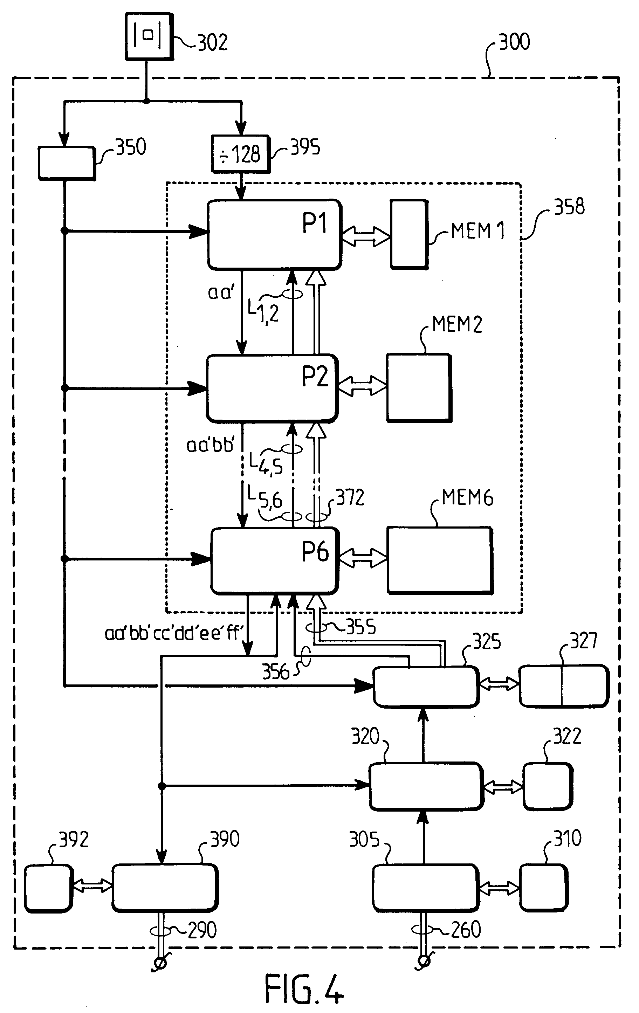

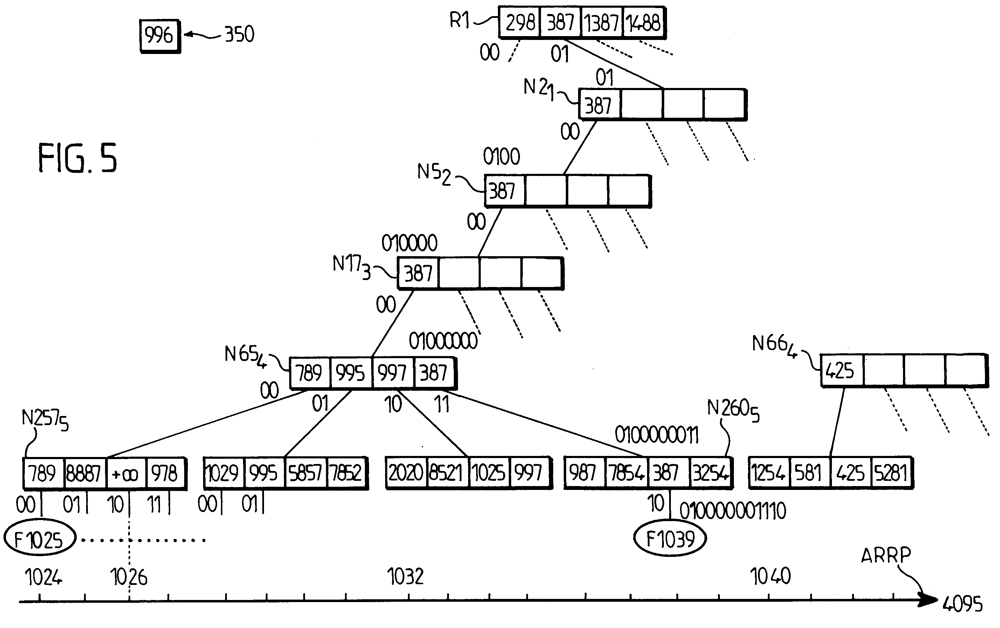

Selon l'invention, le circuit d'affectation 300 montré à la figure 4 est basé sur un fonctionnement d'une arborescence explicitée à l'aide de la figure 5.

Cette arborescence, dans le cadre de l'exemple décrit, est une arborescence quaternaire, c'est-à-dire qu'à partir d'une racine R1, sont rattachés quatre noeuds $N1_1$ à $N4_1$ constituant un premier étage de noeuds et qu'à chacun de ces noeuds $N1_1$ à $N4_1$ sont rattachés quatre autres noeuds $N1_2$ à $N4_2$ puis $N5_2$ à $N8_2$, $N9_2$ à $N12_2$ et $N13_2$ à $N16_2$ d'un deuxième étage, pour arriver à un cinquième étage où à chacun des noeuds $N1_5$ à $N1024_5$ sont rattachées 4096 feuilles $F_1$ à $F_{4096}$. Seuls quelques noeuds et feuilles ont été représentés sur la figure 5, afin de ne pas l'alourdir. On définit un sens feuilles-racine lorsqu'on part depuis les feuilles vers la racine et un sens racine-feuilles pour le sens contraire.

On va d'abord décrire ce circuit d'affectation dans le sens feuilles-racine.

Il se compose d'un circuit de réception de notification 305 qui reçoit de la ligne 260 les codes de notifications émanant des organes de file d'attente $250_1$, $250_2$, $250_3$, ..., $250_M$. Ce circuit, au moyen d'une table 310, affecte un code de priorité à chaque code de reconnaissance. Ce code de priorité est ensuite fourni à un organe de comptage 320 qui incrémente d'une unité le contenu d'une ligne d'une table 322. Cette table 322 fait correspondre ses lignes avec le code de priorité. Puis, si le compte est 1, le code de priorité est transmis vers un organe calculateur de dates 325 qui coopère avec une troisième table 327. Cette table 327 est formée de lignes qui font correspondre ensemble le code de priorité, une date théorique $dth_i$ et la période $td_i$. Le calculateur de date 325 détermine la date $dth_i$ à remettre à jour sur les considérations suivantes, en tenant compte notamment de la date courante dtc qui est fournie par un organe de datation 350, piloté par l'horloge 302 et en tenant compte, aussi, de la date $dtha_i$ déjà calculée au tour précédent :

1°) Cas

Il y a eu rupture de flux, ce qui se traduit par :

$$dtha_i + dt_i < dtc, \text{ alors } dth_i = dtc,$$

la cellule peut alors être envoyée immédiatement.

2°) Cas

Le flux est continu, donc limité par son débit. On a par conséquent :

$$dtha_i + dt_i \geq dtc, \text{ alors } dth_i = dtha_i + td_i$$

Le code de priorité est ensuite transmis sur un ensemble de fils 355 accompagné de la date $dth_i$, transmis sur un ensemble de fils 356 à un processeur de feuilles P6 faisant partie d'un circuit d'arborescence 358. Ce circuit 358 comporte, outre le processeur P6, les processeurs P1 à P5. A ce processeur P6, est rattachée une mémoire MEM6 toujours organisée en 1024 lignes contenant chacune quatre dates théorique relatives à quatre feuilles. La date théorique va être rangée à un emplacement fixé par son code de priorité d'une manière qui va être explicitée plus loin dans le présent exposé. Le processeur P6 va fournir sur un ensemble de fils $L_{5,6}$ la date théorique la plus petite parmi les quatre précitées et sur un ensemble de fils 372 un code d'emplacement déduit du code de priorité. En fonction de ces informations, le processeur P5 qui suit va effectuer les mêmes opérations de sorte que lorsqu'on considère le dernier processeur P1, celui-ci contient, dans sa mémoire MEM1, les quatre dates théoriques ayant les valeurs les plus basses. Ceci sera décrit plus en détail dans la suite du présent exposé. Ce qui vient d'être décrit est un traitement dans le sens feuilles-racine.

On décrit maintenant le circuit d'affectation 300 dans le sens racine-feuilles.

Au niveau du processeur P1, sont donc rangées en mémoire les quatre dates théoriques les plus petites dites dates racines. Ces dates sont comparées à la date courante fournie par l'organe de datation 350. De ces quatre dates, le processeur P1 en retient une seule en appliquant les étapes suivantes :

a) - seules les dates inférieures ou égales à la date courante sont considérées,

b) - choisir l'élément le plus prioritaire c'est-à-dire prendre l'élément le plus à droite, correspondant donc normalement au débit le plus élevé,

c) - passer au noeud de l'étage inférieur selon le sens racine-feuilles en s'aidant de l'emplacement de l'élément de l'étape b).

Si aucune date n'est retenue, aucune action n'est évidemment à entreprendre. Si une date est retenue on transmet au processeur P2 l'emplacement de la date retenue au niveau de P1 soit "aa'". Cet emplacement désigne un noeud auquel sont rattachées quatres dates. On effectue les mêmes étapes pour déterminer ainsi un deuxième code d'emplacement "bb'" et on transmet à P3 le code d'emplacement pour un autre noeud. Le code transmis à P3 est la concaténation des deux codes d'emplacements précédents soit : "aa'bb'". Ainsi, à la sortie du processeur P6 on obtient un code d'emplacement :

"aa'bb'cc'dd'ee'ff'" Ce code correspond au code de priorité et est appliqué au circuit convertisseur de codes 390 qui, au moyen d'une table 392, fournit le code VP ou le code de reconnaissance pour être émis sur la ligne 290 afin que la cellule soit émise. Le fait que la cellule élue d'un certain code de priorité soit émise entraîne les actions suivantes. Une première action consiste en que l'organe de comptage 320 décompte d'une unité le contenu de la table 322 à la ligne relative au code de priorité élue. Une autre action consiste à tester le compte final. Si ce compte est non nul, on redéfinit une nouvelle date théorique qui est appliquée au circuit d'arborescence. Si le compte est nul, il n'y a donc plus de cellules à envoyer, on détermine une date théorique " $+\infty$ " qui n'a, par principe, aucune chance d'être élue, le code réservé : " $+\infty$ ", est affecté à cette date.

Selon un aspect de l'invention, pour un traitement racine-feuilles, on peut effectuer, en mode pipe-line une pluralité de traitements feuilles-racine, pour un seul traitement racine-feuilles.

Le circuit d'arborescence fonctionne avec un rythme fourni par un circuit diviseur 395 qui divise par 128, par exemple, les impulsions de l'horloge 302. On peut ainsi obtenir 42 (128/3) insertions de nouvelles dates théoriques pour la détermination d'un seul VP élu en comptant un cycle pour l'accès mémoire lors du traitement racine-feuilles et deux cycles pour l'accès mémoire pour le traitement feuilles-racine.

Les circuits qui viennent d'être décrits permettent de définir une cellule élue, en très peu de temps, compatible avec la vitesse de transmission des réseaux A.T.M. (155 Mbits/s).

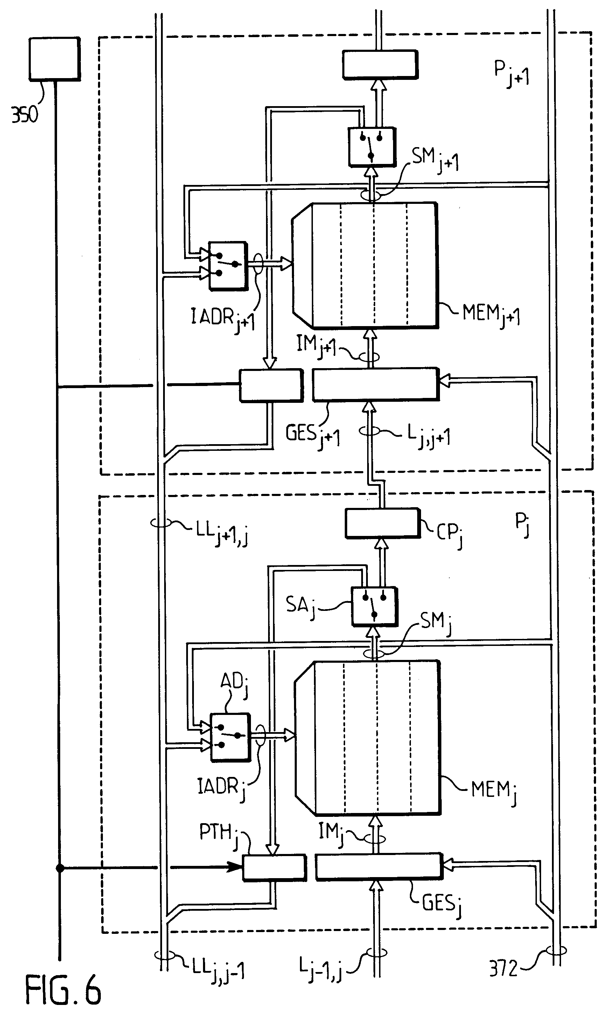

La figure 6 montre en détail l'organisation des processeurs avec leur mémoire associée.

Sur cette figure, on a représenté deux de ces processeurs en cascade que l'on a référencé respectivement par $P_j$ et par $P_{j+1}$ et leur mémoire associée par $MEM_j$ et $MEM_{j+1}$. Les informations qui viennent en amont, en considérant le sens feuilles-racine, sont transmises par la ligne 372 qui transmet les codes de priorité. Des lignes $L_{j-1,j}$ pour le processeur $P_j$ et $L_{j,j+1}$ pour le processeur $P_{j+1}$ transmettent les dates théoriques retenues par les processeurs amont. Les mémoires $MEM_j$ et $MEM_{j+1}$ sont munies d'une sortie de données $SM_j$ et $SM_{j+1}$, d'une entrée de données $IM_j$ et $IM_{j+1}$ et d'une entrée d'adressage $IADR_j$ et $IADR_{j+1}$. Dans ce qui suit, on s'intéresse plus particulièrement au processeur $P_j$. L'entrée de données $IM_j$ est connectée à la sortie d'un circuit de gestion d'entrée $GES_j$. Comme la mémoire $MEM_j$ est organisée en lignes contenant chacune quatre codes, le circuit de gestion a pour rôle de mettre ce code au bon emplacement de ligne. Il adresse une ligne, par l'intermédiaire d'un circuit d'aiguillage $AD_j$ à deux positions, avec une première partie du code provenant de la ligne 372. Les données de ladite ligne transitent par un circuit d'aiguillage $SA_j$ à deux positions. Dans un premier temps, le circuit de gestion $GES_j$ surcharge par le code venant de la ligne $L_{j-1,j}$ un des quatre codes mémorisés par $MEM_j$ en fonction d'une autre partie du code provenant de la ligne 372. Dans un deuxième temps, un organe de comparaison $CP_j$ détermine le code

de plus faible valeur contenu sur cette ligne pour être transmis sur la ligne $L_{j,j+1}$. Ceci constitue le traitement feuilles-racine.

Le traitement racine-feuilles consiste tout d'abord à changer les positions des circuits d'aiguillage $SA_j$ et $AD_j$. La mémoire $MEM_j$ est alors adressée par un code provenant de la ligne $LL_{j+1,j}$ qui fournit la concaténation des éléments du code d'emplacement. Un organe de recherche $PTH_j$ dont l'entrée est reliée à la sortie de données de la mémoire $MEM_j$ par l'intermédiaire du circuit d'aiguillage $SA_j$, fournit un code d'emplacement du noeud d'où vient la date la plus prioritaire de la ligne considérée. Ce code d'emplacement est établi en comparant les codes à son entrée avec ceux provenant de l'organe de datation 350. Ce code est concaténé avec le code fournit par le processeur $P_{j+1}$ sur la ligne $LL_{j+1,j}$. Les circuits ainsi décrits permettent un fonctionnement en pipe-line, c'est-à-dire : pendant que le processeur gère un code, le processeur suivant gère un code précédent. On constatera que le traitement racine-feuilles tiendra compte de mise à jour postérieure sur un code à son traitement feuilles-racine.

Le fonctionnement du circuit d'affectation peut être maintenant explicité sur la figure 5.

Sur cette figure, les différentes feuilles comportent chacune des dates théoriques calculées par l'organe calculateur de dates 325. Les priorités sont portées sur une flèche ARRP.

Par exemple, on suppose qu'il n'a plus de cellules relatives au code de priorité 1026, ce qui est indiqué par l'organe de comptage 320 de la figure 4 ; on marque alors comme date théorique la date la plus grande possible :" $+\infty$". Ainsi, on est sûr que cette date ne sera jamais élue. Le processeur P6 qui a en charge les noeuds $N1_5$ à $N1024_5$ (seuls sont référencés, sur la figure 5, les noeuds $N257_5$ et $N260_5$) enverra les dates les plus faibles vers le processeur P5 soit : 789, 995, 997, 387... respectivement. Sur la figure 5, c'est la date 387, qui provient du noeud $N260_5$, qui est finalement la plus petite et remonte donc jusqu'à la racine R1 prise en charge par le processeur P1. Dans le sens racine-feuilles, les dates inférieures ou égales à la date courante (996''), soit : 298 et 387, sont sélectionnées et parmi les sélectionnées, on retient la date la plus à droite soit 387. On détermine le code d'emplacement de cette date : "01" de sorte que l'on obtient l'emplacement du noeud dans l'étage en dessous ($N2_1$), en admettant que l'emplacement au noeud $N2_1$ est donné par "00", on détermine le noeud $N5_2$ de l'étage inférieur et ainsi de suite jusqu'au noeud $N65_4$ où l'emplacement de la date 387 est donné par "11" ce qui donne le noeud $N260_5$ comportant cette date 387 à l'emplacement "10". La concaténation de tous ces codes d'emplacement fournit le code de priorité de la date théorique choisie soit :
"01 00 00 00 11 10".

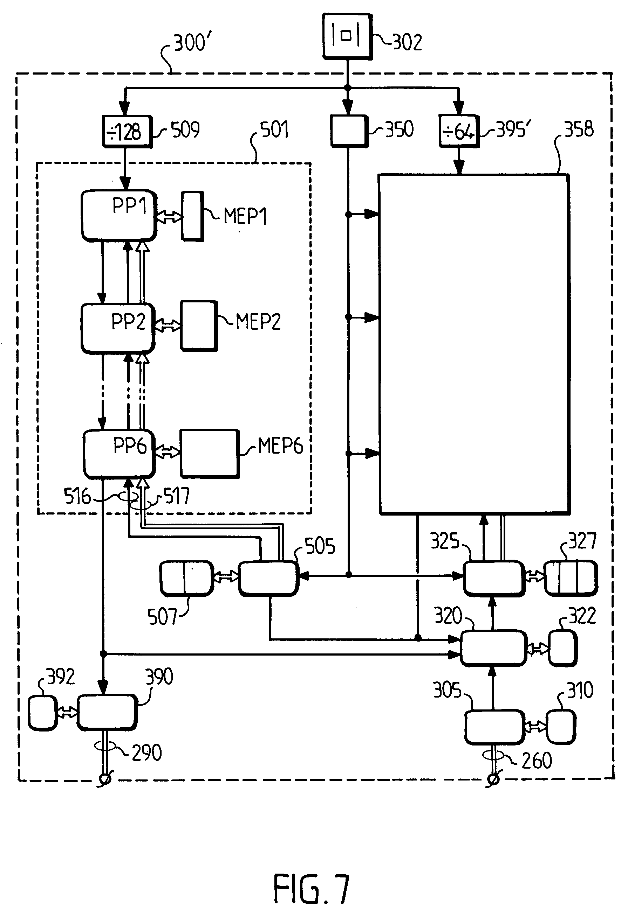

Un autre mode de réalisation de l'invention est montré à la figure 7.

Ce mode permet encore d'éviter la gigue pour un trafic plus important. Selon ce mode, le circuit d'affectation réalisé en variante porte la référence 300'. Sur cette figure les éléments communs aux figures précédentes portent les mêmes références. Ce circuit 300' comporte, en plus du circuit d'arborescence 358, un second circuit d'arborescence 501 dont l'entrée est reliée à la sortie du premier, via un circuit de calcul de butée 505. Ce circuit détermine, en fonction du code de priorité élue fourni par le premier circuit, une date de butée en coopérant avec une mémoire de butée 507 qui contient, sur chaque ligne pointée par un code de priorité, la période de butée $tb_i$. La période de butée est calculée en fonction d'une tolérance "$\tau$" de la période $td_i$ :

$$tb_i = \tau.td_i,$$

donc, la date de butée est :

$$dtb_i = dth_i + tb_i$$

Ces deux circuits d'arborescence 358 et 501 montés en cascade fonctionnent à des cadences différentes, imposées par des circuits diviseurs 395' pour le circuit d'arborescence 358 et par le circuit diviseur 509 pour le circuit 501. Le second travaille à une cadence double, le circuit diviseur 509 divise par 128 les impulsions de l'horloge 302 tandis que le circuit diviseur 395' divise cette fois-ci par 64.

Le deuxième circuit d'arborescence 501 est formé de six processeurs PP1 à PP6 auxquels sont rattachées des mémoires MEP1 à MEP6 respectivement. Ce deuxième circuit 501 a un comportement similaire au premier.

Dans le sens feuilles-racine, les différentes dates butées avec leurs codes de priorité sont envoyées au processeur PP6 via des ensembles de fils 516 et 517 respectivement. Ces dates butées sont enregistrées dans la mémoires MEP6. Le processeur PP6 fournit au processeur PP5 la date butée la plus faible, et ainsi de suite jusqu'au processeur PP1.

Dans le sens racine-feuilles, la date butée la plus petite est cherchée en commençant par le processeur PP1 de la même manière, relative aux dates théoriques dans le circuit d'arborescence 358, mais sans prendre en considération la date courante "dtc". Le code de priorité qui sort du circuit 501 avant d'être appliqué au circuit 390 est appliqué à l'organe de comptage 320 de la figure 4 pour décrémenter le nombre de cellules à traiter. Selon que la gigue admissible a une valeur supérieure ou non à 1, la table 322 sera mise à jour par le premier circuit d'arborescence 358 ou le deuxième circuit 501. Si la gigue tolérée est telle que $\tau > 1$, la table 322 est mise à jour par le circuit 501. Si $\tau < 1$, c'est le circuit 358 qui met à jour la table 322.

Dans tous les cas, après recherche d'une priorité sur un arbre, celui-ci doit être mis à jour.

D'autres exemples peuvent être trouvés à partir de l'exemple décrit. Ainsi, il peut être envisagé des arborescences autres que quaternaires notamment binaires ou même ternaires. Les feuilles peuvent aussi se raccorder à des noeuds sur différents étages.

Il est possible de simplifier le dispositif tel que décrit, tout en restant dans le cadre de l'invention. Par exemple, le dispositif peut fonctionner sans notification concernant un ou plusieurs ou même tous les circuits de service. Dans ce mode de réalisation, ceux-ci sont appelés "circuits de service auto-notifiés". Le circuit d'arborescence 358 est alimenté une première fois pour démarrer ces circuits de service sans notification. Les contenus de l'élément de comptage 320 qui sont affectés à ces circuits de service auto-notifiés ne sont pas considérés, de sorte que ceux-ci sont choisis périodiquement dans le circuit d'arborescence, même en l'absence de cellule en attente. L'accès direct des tables qui contiennent la période de chaque circuit de service permet une modification immédiate du débit. En outre, par cette mesure, le système de l'invention est capable de transmettre des flux ayant des débits rapidement variables et ceci est obtenu avec une gigue acceptable.

## Revendications

1. Système de communication formé d'au moins un réseau du genre A.T.M., notamment, qui transmet d'un de ses points d'accès à un autre des cellules d'informations comportant un identificateur de routage (VP) et d'au moins un dispositif de multiplexage (160) constitué par :
   - une pluralité de bornes d'accès pour des utilisateurs ayant des cellules à transmettre, avec un certain débit, vers une certaine destination définie par ledit identificateur de routage,
   - au moins une borne de raccord pour au moins un point d'accès dudit réseau,
   - une pluralité de circuits de service munis d'organes de files d'attente pour emmagasiner chacun les cellules d'utilisateur ayant un même identificateur de routage et pour rendre disponibles, sur des sorties de cellules, les cellules emmagasinées,

- un circuit d'affectation pour déterminer la fourniture, à ladite borne de raccord par l'intermédiaire d'un circuit de sortie, d'une cellule, dite cellule élue, parmi les cellules disponibles,

système caractérisé en ce que le circuit d'affectation comporte :

- une table de correspondance pour affecter d'une manière biunivoque les indicateurs de routage à un code de priorité qui fixe un ordre de priorité d'émission des cellules en fonction du débit,
- un organe de calcul de date théorique d'émission pour fournir, en fonction du débit, une date, dite date théorique d'émission, aux cellules reçues par chaque circuit de service et
- un premier circuit d'arborescence formé
  - de "feuilles " pour recevoir les dates théoriques pour chaque circuit de service,
  - d'une racine pour contenir des dates dites dates racines à partir desquelles est établie la date la plus prioritaire,
  - d'un circuit d'extraction pour fournir le code de priorité à partir des dates racines.

2. Système de communication selon la revendication 1 caractérisé en ce que le circuit d'arborescence est formé :

- d'une succession de couches allant des feuilles vers la racine depuis lesdites feuilles pour la couche la plus en amont et des noeuds pour les plus en aval jusqu'à un noeud racine,
- d'une pluralité de branches amont pour fournir à un noeud aval des dates provenant de feuilles ou d'autres noeuds amont et
- d'une branche aval pour fournir à un noeud aval, à partir d'un noeud amont, la date la plus petite parmi les dates reçues par le noeud amont.

3. Système de communication selon la revendication 2 caractérisé en ce que le circuit d'extraction est formé :

- d'un registre pour contenir la date courante mise à jour à chaque temps cellule,
- d'un circuit de comparaison rattaché à chaque couche comportant une entrée d'identification de noeud et une sortie pour fournir à destination du circuit de comparaison amont l'adresse du noeud à partir de la comparaison des dates contenues dans le noeud avec la date courante et

- d'un circuit de concaténation pour fournir le code de priorité élu en effectuant la concaténation de tous les codes fournis aux sorties des circuits de comparaison.

4. Système de communication selon l'une des revendications 1 à 3, caractérisé en ce que le circuit d'affectation comporte :

- un organe de calcul de date butée pour fournir, en fonction d'une gigue tolérable pour chaque indicateur de routage (VP) une date tenant compte de cette tolérance,
- un deuxième circuit d'arborescence connecté en cascade avec le premier, coopérant avec cet organe de calcul de date butée pour fournir à sa racine la date butée la plus faible à partir de laquelle la cellule élue relative à l'identificateur de routage est déterminée.

FIG.1

FIG.2

FIG.3

FIG.4

FIG. 5

FIG.6

FIG. 7

**European Patent Office**

**EUROPEAN SEARCH REPORT**

Application Number

EP 95 20 1573

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | FR-A-2 587 861 (DEVAULT ET AL)<br>* abstract; claims 1,2; figures 1,3 * | 1-4 | H04Q11/04<br>H04J3/16 |
| A | INT. SWITCHING SYMPOSIUM 92,<br>vol.2, October 1992, JAPAN<br>pages 316 - 320, XP337736<br>BOYER ET AL<br>* alinéa 2-5 * | 1-4 | |
| A | EP-A-0 138 717 (DEVAULT ET AL)<br>* abstract; claims 1-5 *<br>* page 3, line 10 - page 4, line 16 *<br>* page 6, line 1 - page 8, line 22 * | 1-4 | |
| A | IEEE JOURNAL OF SOLID STATE CIRCUITS,<br>vol.27, no.11, November 1992, NY, US<br>pages 1634 - 1643, XP320793<br>CHAO ET AL<br>* alinéa II et III; Fig. 5 * | 1-4 | |

**TECHNICAL FIELDS SEARCHED** (Int.Cl.6)

H04L

The present search report has been drawn up for all claims

| Place of search | Date of completion of the search | Examiner |
|---|---|---|
| THE HAGUE | 4 October 1995 | Ali, A |